# EUROPÄISCHE PATENTANMELDUNG

(11) **EP 1 967 309 A1**
(43) Veröffentlichungstag der Anmeldung: **10.09.2008**
(21) Anmeldenummer: 08002724.6
(22) Anmeldetag: 14.02.2008
(51) Int. Cl.: B23D 47/12, B23D 45/02

(54) **Sägeeinrichtung mit Zugfunktion**

(30) Priorität: 09.03.2007 DE 202007003682 U
(71) Anmelder: Metabowerke GmbH, 72622 Nürtingen (DE)
(72) Erfinder: Blekker, Ingo, 49843 Uelsen (DE)
(74) Vertreter: Gesthuysen, von Rohr & Eggert

(57) **Zusammenfassung**

Gegenstand der Erfindung ist eine Sägeeinrichtung mit einem eine Werkstückauflagefläche (I) bildenden Träger (2) und einem unterhalb oder oberhalb der Werkstückauflagefläche (1) angeordneten Sägeaggregat mit einem Antriebsmotor (3) und einem davon angetriebenen Sägeblatt (4), dessen Ebene eine Längsrichtung der Sägeeinrichtung definiert, wobei bei unterhalb der Werkstilckauflagefläche angeordnetem Sägeaggregat das Sägeblatt (4) die Werkstückauflagefläche (1) von unten her in einem in Längsrichtung verlaufenden Schlitz (5) durchsetzt und wobei das Sägeblatt (4) gegenüber dem Träger (2) in Längsrichtung über eine bestimmte Strecke verschiebbar oder verfahrbar ist.

Diese Sägeeinrichtung mit Zugfunktion ist hinsichtlich der Handhabung der Zugfunktion dadurch verbessert, daß der Antriebsmotor (3) bezüglich der Längsrichtung in fester Relativlage zum Träger (2), vorzugsweise ortsfest am Träger (2), angeordnet ist und daß das Sägeblatt (4) mit dem Antriebsmotor (3) über ein lageunabhängig arbeitendes Kraftübertragungsmittel (14) antriebstechnisch verbunden ist. Insbesondere ist das Kraftübertragungsmittel (14) umlaufend ausgeführt.

## Beschreibung

Die Erfindung betrifft eine Sägeeinrichtung mit Zugfunktion mit den Merkmalen des Oberbegriffs von Anspruch 1.

Eine Sägeeinrichtung der in Rede stehenden Art mit einem unterhalb der Werkstückauflagefläche angeordneten Sägeaggregat ist eine Unterflurzugsäge (DE-U-20 2006 008 586). Grundprinzip einer Unterflurzugsäge ist die Anordnung des Sägeaggregates in einem Schlitten, der unter der Tischplatte im Außengehäuse in Längsrichtung des Außengehäuses verschiebbar ist. Dadurch kann man das Kreissägeblatt im Längsschlitz von hinten nach vorne ziehen und dadurch das Werkstück beim Kappen auf der Tischplatte ortsfest liegen lassen. Dadurch wird eine besonders gute Schnittqualität erreicht. Grundsätzlich könnte man statt eines Kreissägeblattes auch ein anderes Sägeblatt, z. B. ein Stichsägeblatt, mit entsprechender Antriebstechnik verwenden.

Eine Sägeeinrichtung der in Rede stehenden Art mit einem oberhalb der Werkstückauflagefläche angeordneten Sägeaggregat ist eine Kappsäge mit Längssägefunktion (DE-U-20 2006 012 341). Eine Kappsäge besteht üblicherweise im wesentlichen aus einem Träger, der eine Werkstückauflagefläche bildet, und einer an diesem Träger angebrachten Halterung, die ein Sägeaggregat hält. Das Sägeaggregat kann um eine Querachse geschwenkt werden, wobei das Sägeblatt des Sägeaggregates aus einer angehobenen Ruhestellung in eine abgesenkte Sägestellung und umgekehrt schwenkt. Zum Kappen taucht der Zahnkranz des Sägeblattes geringfügig in einen sich in Längsrichtung erstreckenden Eintauchschlitz der Werkstückauflagefläche ein. Mit dieser Bewegung des Sägeblattes kann ein auf der Werkstückauflagefläche befindliches Werkstück abgeschnitten - gekappt - werden.

Zur Vergrößerung der Schnittlänge ist es bekannt, Kappsägen dieser Art mit einer Zugfunktion zu versehen. Eine Zugfunktion in Längsrichtung führt dazu, daß die erzielbare Schnittlänge der Kappsäge länger ist als es sich aus dem Durchmesser des Sägeblattes ergibt. Das Sägeblatt durchtrennt das Werkstück nicht nur infolge der Schwenkbewegung um die Querachse, sondern auch noch infolge einer Verschiebebewegung senkrecht zur Querachse und parallel zur Werkstückauflagefläche, also in Längsrichtung. Solche Sägen sind kombinierte Kapp- und Zugsägen. Diese sind besonders bekannt mit einem Werkstückauflagetisch kleinen Durchmessers, der in Längsrichtung einen Auslegerarm mit darin verlaufendem Eintauchschlitz aufweist.

Bekannt sind auch Kappsägen in Form von Radialarmsägen. Bei diesen ist das Sägeaggregat an der Halterung nicht um eine Querachse schwenkbar angebracht, sondern ist lediglich vertikal verschiebbar. Radialarmsägen haben immer eine Zugfunktion in Längsrichtung, weil das eigentliche Kappen des auf der Werkstückauflagefläche befindlichen Werkstückes hier nur durch die Verschiebebewegung des Sägeblattes in Längsrichtung parallel zur Werkstückauflagefläche erfolgt.

Bei allen Sägeeinrichtungen mit Zugfunktion wird das Sägeaggregat aus Antriebsmotor, ggf. Untersetzungsgetriebe und Kreissägeblatt insgesamt in Längsrichtung gegenüber dem Träger über die gewünschte Strecke verschoben oder verfahren. Die dabei zu bewegende große Masse des Sägeaggregates muß beim Verschieben bzw. Verfahren beschleunigt und wieder abgebremst werden. Läßt man das Sägeaggregat los, so kehrt es meist unter Federkraftwirkung in seine hintere Ruhestellung zurück. Dabei prallt es mit erheblicher Kraft auf einen Ruhestellungsanschlag.

Der Erfindung liegt die Problemstellung zugrunde, die bekannte, zuvor erläuterte Sägeeinrichtung mit Zugfunktion hinsichtlich der Handhabung der Zugfunktion zu verbessern.

Die zuvor aufgezeigte Problemstellung ist bei der hier beanspruchten Sägeeinrichtung mit den Merkmalen des Anspruchs 1 gelöst.

Erfindungsgemäß wird das Sägeaggregat in einen am Träger fest angeordneten, dort verbleibenden Teil und einen in Längsrichtung verschiebbaren Teil aufgeteilt. Alle schweren Teile des Sägeaggregates, insbesondere der Antriebsmotor und das ggf. vorhandene Untersetzungsgetriebe am Antriebsmotor können in fester Relativlage zum Träger, vorzugsweise ortsfest am Träger angeordnet sein. Das gilt bezüglich der Längsrichtung, läßt also Verstellmöglichkeiten in Höhenrichtung oder Breitenrichtung offen. Diese sind nicht Thema der vorliegenden Erfindung.

Bewegt wird nur noch das Sägeblatt und ein Halter dafür, so daß die zu bewegende Masse insgesamt einen Bruchteil der bislang zu bewegenden Masse des Sägeaggregates beträgt. Die Handhabung in der Praxis ist weitaus zweckmäßiger als bisher.

Die antriebstechnische Verbindung des in Längsrichtung beweglichen Sägeblattes mit dem Antriebsmotor gelingt über ein Kraftübertragungsmittel, das erfindungsgemäß lageunabhängig arbeitet. Dabei ist zu berücksichtigen, daß der Verschiebeweg des Sägeblattes in Längsrichtung relativ begrenzt ist, so daß verschiedene Arten von lageunabhängig arbeitenden Kraftübertragungsmitteln in Frage kommen.

Bevorzugte Ausgestaltungen und Weiterbildungen der Lehre sind Gegenstand der Unteransprüche.

Von besonderer Bedeutung ist eine Ausgestaltung der erfindungsgemäßen Sägeeinrichtung mit einem endlos umlaufenden Kraftübertragungsmittel, beispielsweise einem Keilriemen, einer Gliederkette oder, insbesondere, einem Zahnriemen. Da das Kraftübertragungsmittel endlos umlaufend ausgeführt ist, ist es gleichgültig, wo das Sägeblatt antriebstechnisch am Kraftübertragungsmittel angreift. Die hohe Drehzahl des Sägeblattes macht es darüber hinaus völlig belanglos, daß der schnellen Bewegung des umlaufenden Kraftübertragungsmittels die langsame Verschiebebewegung des Sägeblattes in Längsrichtung überlagert wird.

Eine andere Möglichkeit zur Realisierung eines lageunabhängig arbeitenden Kraftübertragungsmittels ist eine längenveränderliche Antriebswelle. Befindet sich der Antriebsmotor beispielsweise deutlich unterhalb des Verschiebeweges des Sägeblattes, so kann eine längenveränderliche Antriebswelle besonders zweckmäßig eingesetzt werden. Sie überträgt durch entsprechende Gestaltung ein Drehmoment, ihre Länge ist aber, beispielsweise durch eine Teleskopfunktion, je nach der Relativlage des Sägeblattes zum Antriebsmotor unterschiedlich.

Eine besonders bevorzugte Konstruktion ist Gegenstand des Anspruchs 4.

Ebenfalls eine ganz besonders bevorzugte Konstruktion ist Gegenstand des Anspruchs 5. Hier befindet sich das Sägeblatt mit seinem antriebstechnischen Kuppelpunkt zwischen Antriebsmotor und Umlenkelement. Bei der in Anspruch 6 beschriebenen Alternative hingegen befindet sich das Sägeblatt mit seinem Kuppelpunkt an einem Umlenkende des Kraftübertragungsmittels, wo sich auch ein Umlenkelement befindet. Die wegen der Verschiebbarkeit des Sägeblattes erforderliche unterschiedliche wirksame Länge des Kraftübertragungsmittels wird durch die zusätzlich vorhandene Spannvorrichtung realisiert, die nach Art einer Riemenspannvorrichtung für Nockenwellenantriebe in Verbrennungsmotoren arbeiten kann.

Besondere Bedeutung kommt auch der in angepaßter Weise realisierten Höhenverstellbarkeit des Sägeblattes zu, die Gegenstand der Ansprüche 7 bis 10 ist.

Im folgenden wird die Erfindung anhand einer lediglich Ausführungsbeispiele darstellenden Zeichnung näher erläutert. In der Zeichnung zeigt
- Fig. 1: ein Beispiel einer Unterflurzugsäge (Stand der Technik),
- Fig. 2: ein Beispiel einer Kappsäge mit Zugfunktion (Stand der Technik),
- Fig. 3: ein bevorzugtes Ausführungsbeispiel einer erfindungsgemäßen Sägeeinrichtung, ausschnittweise, unter Weglassung anderer Baugruppen, lediglich für den Bereich Antriebsmotor und Kreissägeblatt dargestellt, und zwar 3.a) mit dem Sägeblatt in der hinteren Ruhestellung, 3.b) mit dem Sägeblatt in der vordersten Stellung,
- Fig. 4: ein weiteres Ausführungsbeispiel mit einem als längenveränderliche Antriebswelle ausgeführten Kraftübertragungsmittel,
- Fig. 5: ein drittes Ausführungsbeispiel mit einem umlaufenden Kraftübertragungsmittel, jedoch zusätzlich mit einer Spannvorrichtung,
- Fig. 6: ein bevorzugtes Ausführungsbeispiel einer erfindungsgemäßen Sägeeinrichtung, ausschnittweise, unter Weglassung anderer Baugruppen, lediglich für den Bereich Antriebsmotor und Kreissägeblatt dargestellt, und zwar 3.a) mit dem Sägeblatt in der obersten Stellung und 3.b) in der untersten Stellung.

Für den generellen Hintergrund von Sägeeinrichtungen mit Zugfunktion, und zwar sowohl Unterflurzugsägen als auch Kappsägen mit Zugfunktion, darf auf die eingangs angeführten deutschen Gebrauchsmuster hingewiesen werden, deren Offenbarungsgehalt hiermit auch zum Offenbarungsgehalt der vorliegenden Gebrauchsmusteranmeldung gemacht wird.

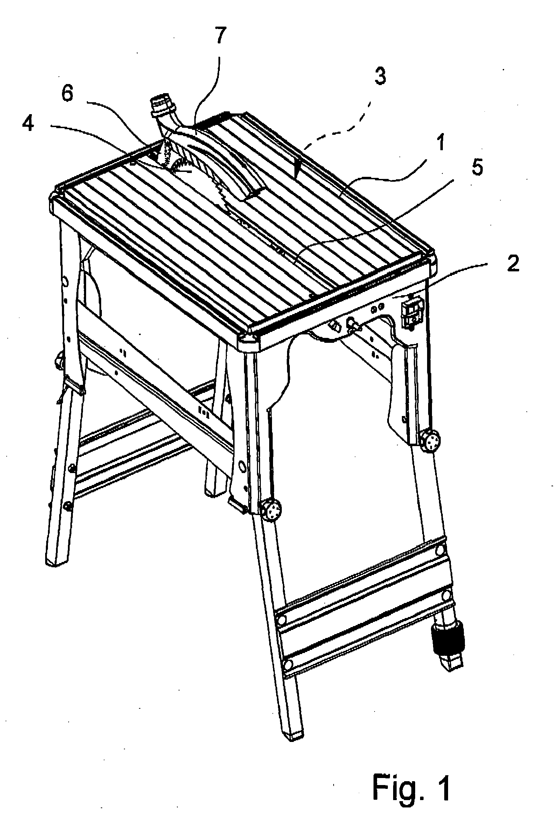

Fig. 1 zeigt ein aus dem Stand der Technik stammendes Beispiel einer Sägeeinrichtung mit einem eine Werkstückauflagefläche 1 bildenden Träger 2 und einem unterhalb der Werkstückauflagefläche 1 des Trägers 2 angeordneten Sägeaggregat. Hier ist dargestellt eine Unterflurzugsäge, bei der der Träger 2 ein Untergestell wie bei einer Tischkreissäge ist.

Das Sägeaggregat ist in Fig. 1 zum Teil verdeckt. Es weist einen unterhalb der Werkstückauflagefläche 1 im Träger 2 versteckten Antriebsmotor 3 und ein davon angetriebenes Kreissägeblatt 4 auf, wobei zwischen beiden, in der Figur nicht erkennbar, noch ein Untersetzungsgetriebe angeordnet sein kann. Wichtig ist, daß die Ebene des Sägeblattes 4 eine Längsrichtung dieser Sägeeinrichtung definiert.

Im in Fig. 1 dargestellten Beispiel durchsetzt das Sägeblatt 4 die Werkstückauflagefläche 1 von unten her in einem in Längsrichtung verlaufenden Schlitz 5. Die Höhenlage des Sägeblattes 4 gegenüber der Werkstückauflagefläche 1 kann verstellt werden, so daß das Sägeblatt 4 unterschiedlich weit nach oben aus dem Schlitz 5 herausragt. Dadurch können unterschiedlich dicke Werkstücke geschnitten werden. Fig. 1 zeigt im übrigen noch verschiedene typische Ausstattungen einer solchen Sägeeinrichtung, nämlich einen höhenverstellbaren und auswechselbaren Spaltkeil 6 sowie eine daran angebrachte Späneabsaughaube 7.

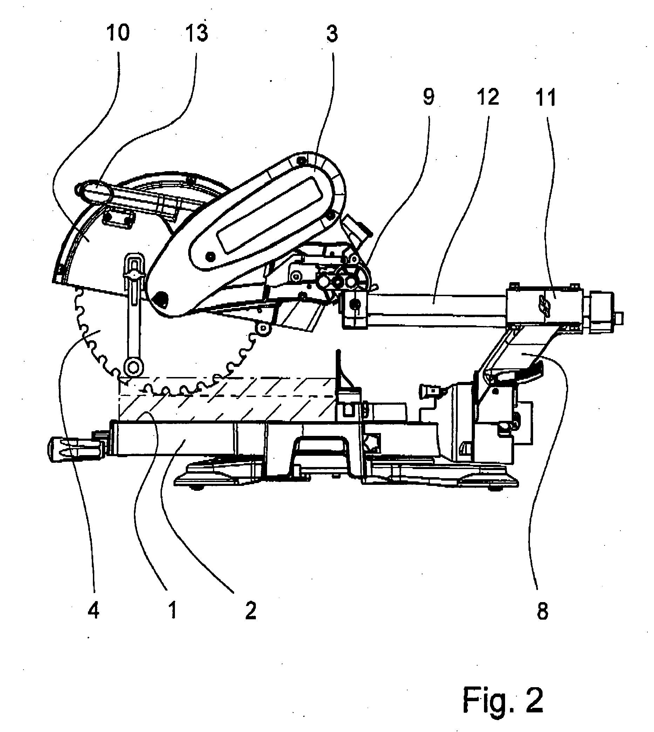

Demgegenüber zeigt Fig. 2 eine Kappsäge mit Zugfunktion, bei der sich das Sägeaggregat mit Antriebsmotor 3 und Sägeblatt 4 oberhalb der Werkstückauflagefläche 1 befindet. Dazu ist am Träger 2 eine Halterung 8 angebracht. An der Halterung 8 ist mittels eines Schwenklagers 9 das Sägeaggregat mit dem Antriebsmotor 3 und dem Sägeblatt 4 schwenkbar angebracht. Das Sägeblatt 4 ist nach oben hin durch eine feststehende Schutzhaube 10 geschützt. Nicht eingezeichnet ist eine üblicherweise außerdem vorhandene untere Pendelschutzhaube.

Zusätzlich zu der Schwenkbewegung, die das Sägeaggregat um die zuvor geschilderte Querachse ausführen kann, ist es möglich, das Sägeaggregat auch in der Horizontalen linear zu bewegen. Dabei wird die Längsrichtung, die bereits die Ebene des Sägeblattes 4 definiert, durch eine am oberen Ende der Halterung 8 angeordnete Führung 11 für eine oder mehrere Zugstangen 12 festgelegt. Durch Ausüben von Kraft auf einen Betätigungsgriff 13 können die beschriebenen Bewegungen des Sägeaggregates veranlaßt werden.

Es gibt Kappsägen mit Zugfunktion in unterschiedlichen Ausführungen mit an unterschiedlichen Stellen angeordneten Zugstangen. Auf das Detail der Ausführung kommt es für die vorliegende Erfindung nicht an.

Den beschriebenen Sägeeinrichtungen ist gemeinsam, daß das Sägeblatt 4 gegenüber dem Träger 2 (und der Werkstückauflagefläche 1 sowie dem darauf befindlichen Werkstück) in Längsrichtung über eine bestimmte Strecke verschiebbar bzw. verfahrbar ist.

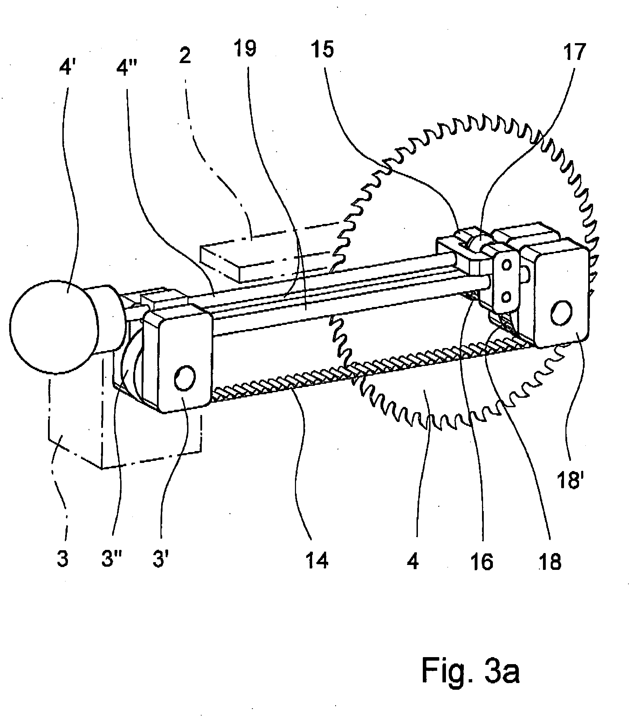

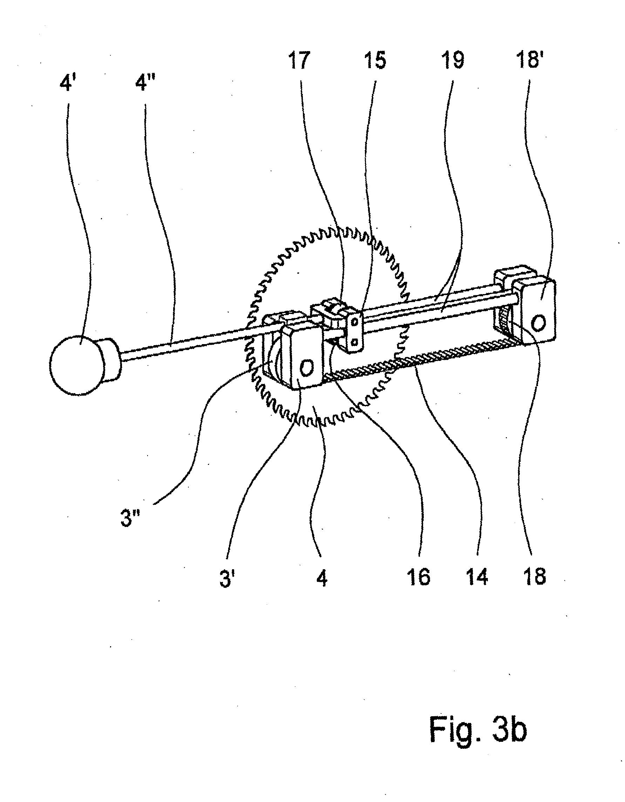

Fig. 3 zeigt nun mit den beiden Teilfiguren den Kern der Lehre der Erfindung. Angedeutet ist dort zunächst der Träger 2, auf dessen Oberseite die Werkstückauflagefläche 1 gebildet ist. Ferner ist angedeutet, daß der Antriebsmotor 3 bezüglich der Längsrichtung in einer festen Relativlage zum Träger 2 angeordnet ist. Der Antriebsmotor 3 ist am Lagerblock 3' links an seiner Ankoppelstelle angedeutet, selbst aber nicht genauer eingezeichnet. Er ist ortsfest am Träger 2 angeordnet und treibt hier das Kraftübertragungsmittel 14 über ein Zahnrad 3" an, das im Lagerblock 3' angeordnet ist. Das Sägeblatt 4 ist aber verfahrbar bzw. verschiebbar, und zwar mittels eines Betätigungsknaufs 4' und einer Stange 4". Die antriebstechnische Verbindung der beiden Elemente gelingt durch ein lageunabhängig arbeitendes Kraftübertragungsmittel 14.

Während ein normales Kraftübertragungsmittel, das bislang bei Sägeeinrichtungen der in Rede stehenden Art eingesetzt worden ist, ortsfest angeordnet ist und eine feste Relativlage von Antriebsmotor 3 und Sägeblatt 4 benötigt, selbst wenn diese voneinander beabstandet angeordnet sind, ist das erfindungsgemäße Kraftübertragungsmittel 14, selbstverständlich im Rahmen des Verschiebe- oder Verfahrweges des Sägeblattes 4, lageunabhängig.

Fig. 3 zeigt ein Ausführungsbeispiel eines lageunabhängigen Kraftübertragungsmittels 14, bei dem das Kraftübertragungsmittel 14 umlaufend ausgeführt ist. Das dargestellte Ausführungsbeispiel zeigt dabei einen Zahnriemen, andere Alternativen sind eine Gliederkette oder ein Keilriemen. Ein Keilriemen integriert gleichzeitig eine Art Überlastkupplung, weil er bei Überlast durchzurutschen pflegt. Bevorzugt ist das dargestellte Ausführungsbeispiel mit einem Zahnriemen.

Es ist gleichgültig, wo auf der endlos umlaufenden Länge des Kraftübertragungsmittels 14 das Sägeblatt 4 mit einem entsprechenden Ankupplungselement mit dem Kraftübertragungsmittel 14 verbunden ist. Die Relativlage des Sägeblattes 4 zum Kraftübertragungsmittel 14 kann sich jederzeit im Betrieb ändern. Die Längsverschiebung des Sägeblattes 4 gegenüber dem Träger 2 verändert nichts an der antriebstechnischen Ankupplung des Sägeblattes 4 an das Kraftübertragungsmittel 14.

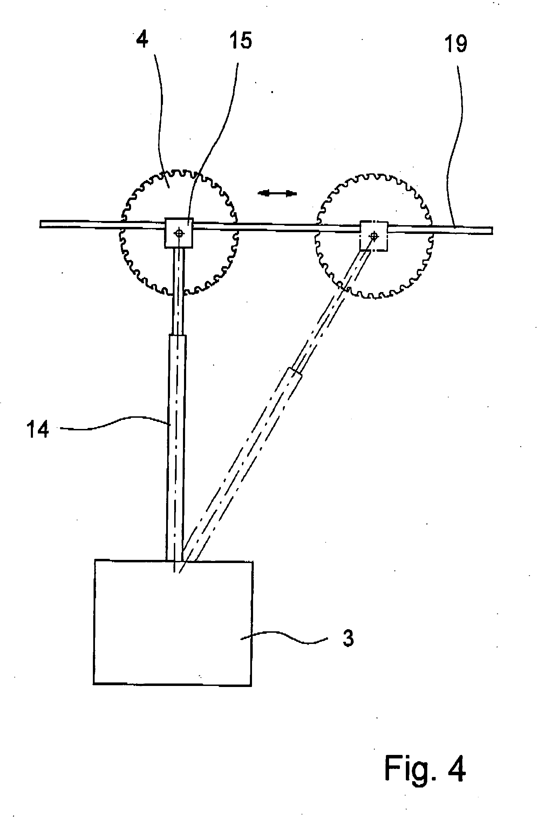

Anders als beim Ausführungsbeispiel in Fig. 3 mit einem umlaufenden Kraftübertragungsmittel 14 zeigt Fig. 4 ein Ausführungsbeispiel, bei dem vorgesehen ist, daß das Kraftübertragungsmittel 14 als längenveränderliche Antriebswelle ausgeführt ist. Man erkennt eine Art Kardan-Teleskopwelle als Kraftübertragungsmittel 14. Das Kraftübertragungsmittel 14 ist hier antriebstechnisch fest sowohl mit dem Antriebsmotor 3 als auch mit dem Kreissägeblatt 4 verbunden. Die Flexibilität in der Relativlage des Kreissägeblattes 4 zum Antriebsmotor 3 wird durch die Längenveränderlichkeit der Antriebswelle 14 realisiert.

Das in Fig. 3 dargestellte und besonders bevorzugte Ausführungsbeispiel zeichnet sich ferner dadurch aus, daß das Sägeblatt 4 an einem am Träger 2 in Längsrichtung verschiebbar gelagerten Halter 15 drehbar gelagert ist und mit einem ebenfalls am Halter 15 drehbar gelagerten Getriebeteil 16, insbesondere einem Zahnrad, gekuppelt ist. Besonders zweckmäßig ist es, wenn am Halter 15 mindestens ein das Kraftübertragungsmittel 14 in Eingriff mit dem Getriebeteil 16 haltendes Andruckelement 17 vorgesehen ist. Das Andruckelement 17 sorgt hier dafür, daß der Zahnriemen nicht vom das Getriebeteil 16 bildenden Zahnrad abspringt.

Das Ausführungsbeispiel in Fig. 3 zeigt ferner eine besonders bevorzugte Konstruktion dergestalt, daß das umlaufende Kraftübertragungsmittel 14 bezüglich der Längsrichtung in fester Relativlage zum Träger 2, hier also ortsfest am Träger 2 angeordnet ist und sich vom Antriebsmotor 3 zu einem Umlenkelement 18 an einem Lagerblock 18' und zurück erstreckt, wobei hier der Halter 15 mit dem Sägeblatt 4 an einer parallel zum Kraftübertragungsmittel 14 angeordneten Führung 19 verschiebbar bzw. verfahrbar gelagert und mit einem Zug des Kraftübertragungsmittels 14 antriebstechnisch verbunden ist. Die Führung 19 läuft parallel zum oberen Zug des das Kraftübertragungsmittel 14 bildenden Zahnriemens und ist hier als Doppelstangenführung ausgebildet. Die Führung 19 hält das Getriebeteil 16 am Halter 15 des Sägeblattes 4 in fester Relativlage zum das Kraftübertragungsmittel 14 bildenden Zahnriemen.

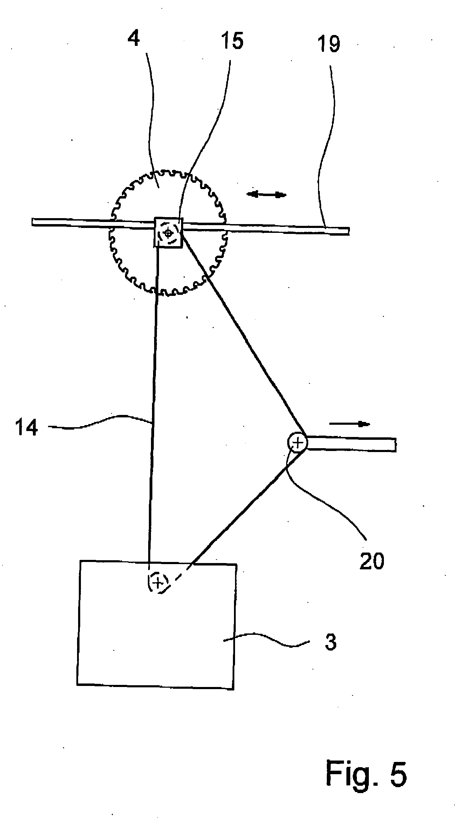

Das in Fig. 5 dargestellte Ausführungsbeispiel geht einen anderen Weg als das in Fig. 3 dargestellte Ausführungsbeispiel. Zwar ist auch hier ein endlos umlaufendes Kraftübertragungsmittel 14, auch hier in Form eines Zahnriemens, vorgesehen. Das Sägeblatt 4 ist aber nicht irgendwo zwischendurch am Kraftübertragungsmittel 14 angekoppelt, sondern es ist vorgesehen, daß das umlaufende Kraftübertragungsmittel 14 sich vom Antriebsmotor 3 zum Sägeblatt 4 und zurück erstreckt und mindestens ein Zug des umlaufenden Kraftübertragungsmittels 14 über eine Spannvorrichtung 20 läuft. Diese sorgt für den Längenausgleich des Kraftübertragungsmittels 14. Derartige Spannvorrichtungen 20 sind aus dem Bereich von Nockenwellen-Antriebsriemen im Motorenbau hinreichend bekannt. Der Pfeil deutet die Spannrichtung an.

Die in den Figuren dargestellte Konstruktion kann grundsätzlich bei beiden Versionen von Sägeeinrichtungen mit Zugfunktion, die eingangs erläutert worden sind, in ganz ähnlicher Weise realisiert werden. In jedem Fall ist der erhebliche Vorteil gegeben, daß die beim Ziehen zu bewegende Masse des Sägeblattes 4 wesentlich geringer ist als die Gesamtmasse des Sägeaggregates bei allen bislang aus dem Stand der Technik bekannten Sägeeinrichtungen mit Zugfunktion.

Um die Schnittiefe des Sägeblattes 4 verändern zu können, ist es bei Sägeeinrichtungen der in Rede stehenden Art üblich, daß das Sägeblatt 4 in seiner Höhenlage gegenüber der Werkstückauflagefläche 1 des Trägers 2 verstellt werden kann. Das geschieht regelmäßig über ein Kurbelgetriebe, mit dem das Sägeaggregat nach oben oder unten verstellt werden kann. Dadurch ist es möglich, unterschiedlich tiefe Schnitte oder auch verdeckte Schnitte in Werkstücken durchzuführen.

Das dargestellte und bevorzugte Ausführungsbeispiel zeigt nun eine besonders zweckmäßige Realisierung einer Höhenverstellung bei einer Sägeeinrichtung gemäß der vorliegenden Erfindung. Vorgesehen ist hier, daß das Sägeblatt 4 und das Kraftübertragungsmittel 14 sowie ggf, dazu gehörende Bauteile wie der Halter 15 und die Führung 19 gemeinsam gegenüber dem Träger 2 in der Höhe verstellbar sind und der Antriebsmotor 3 unabhängig von der Höheneinstellung mit dem Kraftübertragungsmittel 14 stets antriebstechnisch verbunden ist. Das einfachste wäre es natürlich, wenn, wie auch im Stand der Technik vorgesehen, der Antriebsmotor 3 gemeinsam mit dem Sägeblatt 4 und dem Kraftübertragungsmittel 14 in der Höhe verstellbar an dem Träger 2 angeordnet ist.

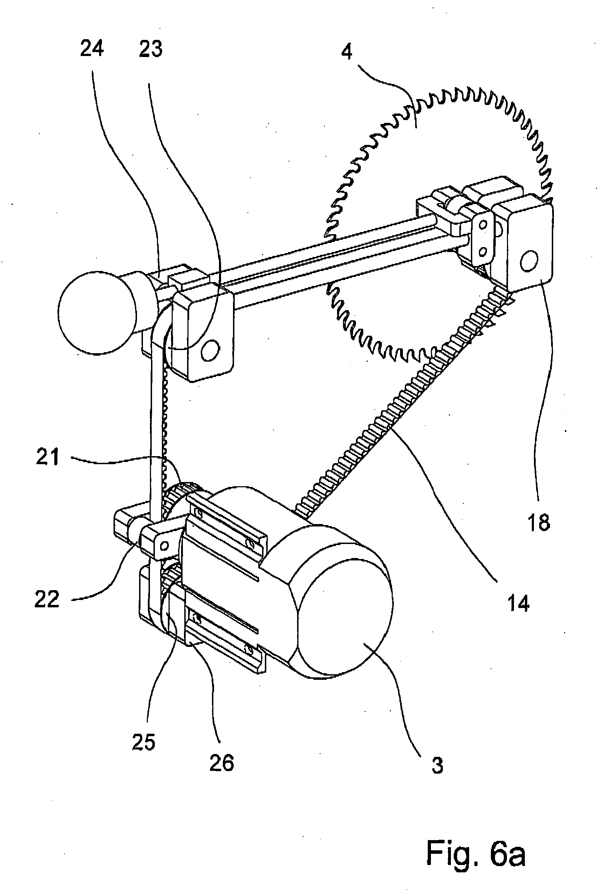

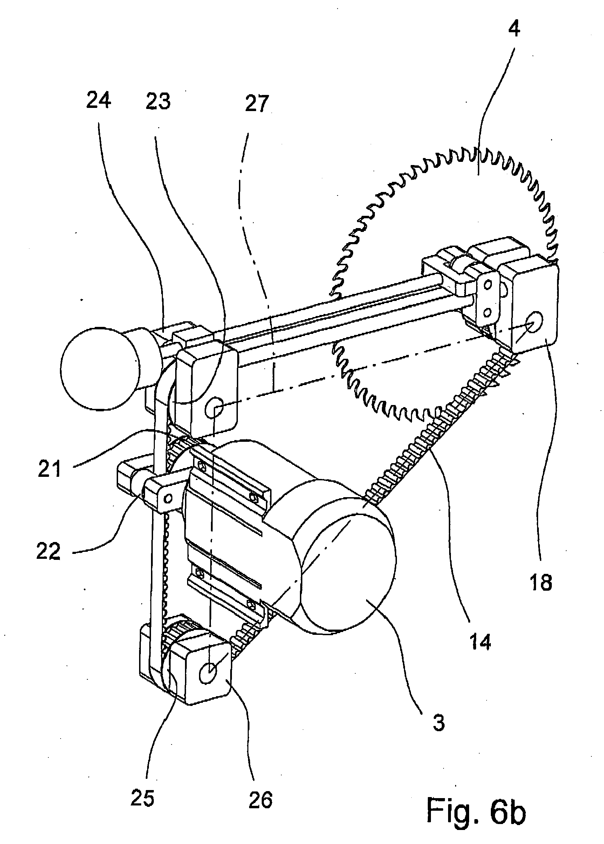

Im in Fig. 6 dargestellten und insoweit bevorzugten Ausführungsbeispiel ist die zuvor genannte, dem Stand der Technik entsprechende Konstruktion jedoch nicht verwirklicht worden. Vielmehr ist hier das Grundprinzip der Lehre der Erfindung konsequent umgesetzt worden dergestalt, daß der Antriebsmotor 3 bezüglich der Höhenrichtung in fester Relativlage zum Träger 2, vorzugsweise ortsfest am Träger 2, angeordnet ist und daß das Kraftübertragungsmittel 14 unabhängig von der Position des Sägeblattes 4 mit einem Getriebeteil 21, insbesondere einem Zahnrad, des Antriebsmotors 3 dauernd in Eingriff steht. Dasselbe Funktionsprinzip, das für das Kraftübertragungsmittel 14 bezüglich des Sägeblattes 4 realisiert worden ist, wird hier nun für das Getriebeteil 21 des Antriebsmotors 3 realisiert. Auch insoweit ergibt sich eine lageunabhängige Kopplung. Dadurch ist es möglich, auch hinsichtlich der Höhenrichtung den Antriebsmotor 3 in fester Relativlage zum Träger 2, insbesondere und hier vorgesehen also ortsfest am Träger 2 anzuordnen. Auch insoweit ergibt sich eine wesentlich erleichterte Verstellbarkeit des Sägeblattes 4.

Das in Fig. 6 dargestellte und insoweit bevorzugte Ausführungsbeispiel zeigt weiter, daß mindestens ein das Kraftübertragungsmittel 14 in Eingriff mit dem Getriebeteil 21 haltendes Andruckelement 22 vorgesehen ist. Auch insoweit wird hier das Kraftübertragungsmittel 14 sicher in Eingriff mit dem Getriebeteil 21, dem Zahnrad, gehalten.

Fig. 6.a) zeigt die normale Tischsägeposition des Sägeaggregates mit höchstmöglich angeordnetem Sägeblatt 4. Fig. 6.b) hingegen zeigt, daß das Sägeblatt 4 weit abgesenkt ist. Man erkennt die geänderte Relativlage des Antriebsmotors 3 gegenüber dem Sägeblatt 4, dem Kraftübertragungsmittel 14 und den mit diesen bewegten Bauteilen.

Man erkennt in Fig. 6 die Leitung des Kraftübertragungsmittels 14 über das Umlenkelement 18 rechts hinten, ein Umlenkelement 23 an einem Lagerblock 24 links vom und ein Umlenkelement 25 an einem Lagerblock 26 unterhalb des Antriebsmotors 3. Angedeutet ist dabei in Fig. 6.a), daß die höhenverstellbaren Bauteile an einem gemeinsamen, gegenüber dem Träger 2 höhenverstellbaren Tragrahmen 27 angeordnet sind. Der Tragrahmen 27 ist in Fig. 6 der Einfachheit halber nur gestrichelt dargestellt, um die mechanisch-konstruktive Verbindung dieser Bauteile anzudeuten.

## Patentansprüche

1. Sägeeinrichtung mit
einem eine Werkstückauflagefläche (1) bildenden Träger (2) und
einem unterhalb oder oberhalb der Werkstückauflagefläche (1) angeordneten Sägeaggregat mit einem Antriebsmotor (3) und einem davon angetriebenen Sägeblatt (4), dessen Ebene eine Längsrichtung der Sägeeinrichtung definiert,
wobei bei unterhalb der Werkstückauflagefläche angeordnetem Sägeaggregat das Sägeblatt (4) die Werkstückauflagefläche (1) von unten her in einem in Längsrichtung verlaufenden Schlitz (5) durchsetzt und
wobei das Sägeblatt (4) gegenüber dem Träger (2) in Längsrichtung über eine bestimmte Strecke verschiebbar oder verfahrbar ist,
**dadurch gekennzeichnet,**
**daß** der Antriebsmotor (3) bezüglich der Längsrichtung in fester Relativlage zum Träger (2), vorzugsweise ortsfest am Träger (2), angeordnet ist und
**daß** das Sägeblatt (4) mit dem Antriebsmotor (3) über ein lageunabhängig arbeitendes Kraftübertragungsmittel (14) antriebstechnisch verbunden ist.

2. Sägeeinrichtung nach Anspruch 1, **dadurch gekennzeichnet,**
**daß** das Kraftübertragungsmittel (14) umlaufend ausgeführt ist,
wobei, vorzugsweise, das Kraftübertragungsmittel (14) als Keilriemen oder als Gliederkette oder als Zahnriemen ausgeführt ist.

3. Sägeeinrichtung nach Anspruch 1, **dadurch gekennzeichnet,**
**daß** das Kraftübertragungsmittel (14) als längenveränderliche Antriebswelle ausgeführt ist.

4. Sägeeinrichtung nach einem der Ansprüche 1 bis 3, **dadurch gekennzeichnet, daß** das Sägeblatt (4) an einem am Träger (2) in Längsrichtung verschiebbar gelagerten Halter (15) drehbar gelagert ist und mit einem ebenfalls am Halter (15) drehbar gelagerten Getriebeteil (16), insbesondere einem Zahnrad, direkt oder über mindestens eine weitere Getriebestufe gekuppelt ist und
daß das Getriebeteil (16) unabhängig von der Position des Sägeblattes (4) mit dem Kraftübertragungsmittel (14) dauernd in Eingriff steht,
wobei, vorzugsweise, am Halter (15) mindestens ein das Kraftübertragungsmittel (14) in Eingriff mit dem Getriebeteil (16) haltendes Andruckelement (17) vorgesehen ist.

5. Sägeeinrichtung nach Anspruch 2 und ggf. Anspruch 4, **dadurch gekennzeichnet,**
**daß** das umlaufende Kraftübertragungsmittel (14) bezüglich der Längsrichtung in fester Relativlage zum Träger (2), vorzugsweise ortsfest am Träger (2), angeordnet ist und sich vom Antriebsmotor (3) zu einem Umlenkelement (18) erstreckt und von dort zum Antriebsmotor (3) zurück verläuft und
**daß** das Sägeblatt (4) bzw. der Halter (15) an einer parallel zur Werkstückauflagefläche (1) angeordneten Führung (19) verschiebbar bzw. verfahrbar gelagert und mit einem Zug des Kraftübertragungsmittels (14) antriebstechnisch verbunden ist.

6. Sägeeinrichtung nach Anspruch 5, **dadurch gekennzeichnet,**
**daß** das umlaufende Kraftübertragungsmittel (14) sich vom Antriebsmotor (3) zum Sägeblatt (4) und zurück erstreckt und mindestens ein Zug des umlaufenden Kraftübertragungsmittels (14) über eine Spannvorrichtung (20) läuft, die für einen Längenausgleich des Kraftübertragungsmittels (14) beim Verschieben des Sägeblattes (4) sorgt.

7. Sägeeinrichtung nach einem der Ansprüche 1 bis 6, **dadurch gekennzeichnet,**
**daß** das Sägeblatt (4) und das Kraftübertragungsmittel (14) sowie ggf. dazu gehörende Bauteile wie der Halter (15) und die Führung (19) gemeinsam gegenüber dem Träger (2) in der Höhe verstellbar sind und der Antriebsmotor (3) unabhängig von der Höheneinstellung mit dem Kraftübertragungsmittel (14) stets antriebstechnisch verbunden ist.

8. Sägeeinrichtung nach Anspruch 7, **dadurch gekennzeichnet,**
**daß** der Antriebsmotor (3) gemeinsam mit dem Sägeblatt (4) und dem Kraftübertragungsmittel (14) in der Höhe verstellbar an dem Träger (2) angeordnet ist.

9. Sägeeinrichtung nach Anspruch 7, **dadurch gekennzeichnet,**
**daß** der Antriebsmotor (3) bezüglich der Höhenrichtung in fester Relativlage zum Träger (2), vorzugsweise ortsfest am Träger (2), angeordnet ist und
**daß** das Kraftübertragungsmittel (14) unabhängig von der Position des Sägeblattes (4) mit einem Getriebeteil (21), insbesondere einem Zahnrad, des Antriebsmotors (3) dauernd in Eingriff steht,
wobei, vorzugsweise, mindestens ein das Kraftübertragungsmittel (14) in Eingriff mit dem Getriebeteil (21) haltendes Andruckelement (22) vorgesehen ist.

10. Sägeeinrichtung nach einem der Ansprüche 7 bis 9, **dadurch gekennzeichnet,**
**daß** die höhenverstellbaren Bauteile an einem gemeinsamen, gegenüber dem Träger (2) höhenverstellbaren Tragrahmen (27) angeordnet sind.

## Geänderte Patentansprüche

### Geänderte Patentansprüche gemäss Regel 137(2) EPÜ.

**1.** Sägeeinrichtung mit
einem eine Werkstückauflagefläche (1) bildenden Träger (2) und
einem unterhalb oder oberhalb der Werkstückauflagefläche (1) angeordneten Sägeaggregat mit einem Antriebsmotor (3) und einem davon angetriebenen Sägeblatt (4), dessen Ebene eine Längsrichtung der Sägeeinrichtung definiert,
wobei bei unterhalb der Werkstückauflagefläche angeordnetem Sägeaggregat das Sägeblatt (4) die Werkstückauflagefläche (1) von unten her in einem in Längsrichtung verlaufenden Schlitz (5) durchsetzt,
wobei das Sägeblatt (4) an einem Halter (15) drehbar gelagert ist,
wobei am Halter (15) eine Stange (4") mit einem Betätigungsknauf (4') angebracht ist, mittels derer das Sägeblatt (4) gegenüber dem Träger (2) in Längsrichtung über eine bestimmte Strecke verschiebbar ist,
**dadurch gekennzeichnet,**
**daß** der Antriebsmotor (3) bezüglich der Längsrichtung ortsfest am Träger (2) angeordnet ist,
**daß** das Sägeblatt (4) mit dem Antriebsmotor (3) über ein lageunabhängig arbeitendes umlaufendes Kraftübertragungsmittel (14) antriebstechnisch verbunden ist,
**daß** das umlaufende Kraftübertragungsmittel (14) bezüglich der Längsrichtung ortsfest am Träger (2) angeordnet ist und sich vom Antriebsmotor (3) zu einem Umlenkelement (18) erstreckt und von dort zum Antriebsmotor (3) zurück verläuft,
**daß** der Halter (15) an einer parallel zur Werkstückauflagefläche (1)angeordneten rührung (19) verschiebbar gelagert ist,
**daß** das Sägeblatt (4) mit einem ebenfalls am Halter (15) drehbar gelagerten Getriebeteil (16) direkt oder über mindestens eine weitere Getriebestufe gekuppelt ist und
**daß** das Getriebeteil (16) unabhängig von der Position des Sägeblattes (4) mit einem Zug des Kxaftübextraguugsmittels (14) dauernd in Eingriff steht.

**2.** Sägeeinrichtung nach Anspruch 1, **dadurch gekennzeichnet,**
**daß** das Kraftübertragungsmittel (14) als Gliederkette oder als Zahnriemen ausgeführt ist.

**3.** Sägeeinrichtung nach Anspruch 1 oder 2, **dadurch gekennzeichnet,**
**daß** am Halter (15) mindestens ein das Kraftübertragungsmittel (14) in Eingriff mit dem Getriebeteil (16) haltendes Andruckelement (17) vorgesehen ist.

**4.** Sägeeinrichtung nach einem der Ansprüche 1 bis 3, **dadurch gekennzeichnet,**
**daß** ein Zug des umlaufenden Kraftübertragungsmittels (14) über eine Spannvorrichtung (20) läuft,

**5.** Sägeeinrichtung nach einem der Ansprüche 1 bis 4, **dadurch gekennzeichnet,**
**daß** der Antriebsmotor (3) gemeinsam mit dem Sägeblatt (4) und dem Kraftübertragungsmittel (14) in der Höhe verstellbar an dem Träger (2) angeordnet ist.

**6.** Sägeeinrichtung nach einem der Ansprüche 1 bis 4, **dadurch gekennzeichnet,**
**daß** das Sägeblatt (4) und das Kraftübertragungsmittel (14) sowie dazu gehörende Bauteile wie der Halter (15) und die Führung (19) gemeinsam gegenüber dem Träger (2) in der Höhe verstellbar sind und der auch in der Höhe ortsfest angeordnete Antriebsmotor (3) unabhängig von der Höheneinstellung mit dem Kraftübertragungsmittel (14) stets antriebstechnisch verbunden ist.

**7.** Sägeeinrichtung nach Anspruch 6, **dadurch gekennzeichnet,**
**daß** das Kraftübertragungsmittel (14) unabhängig von der Position des Sägeblattes (4) mit einem Getriebeteil (21), insbesondere einem Zahnrad, des Antriebsmotors (3) dauernd in Eingriff steht.

**8.** Sägeeinrichtung nach Anspruch 7, **dadurch gekennzeichnet,**
**daß** mindestens ein das Kraftübertragungsmittel (14) in Eingriff mit dem Getriebeteil (21) haltendes Andruckelement (22) vorgesehen ist.

**9.** Sägeeinrichtung nach einem der Ansprüche 5 bis 8, **dadurch gekennzeichnet,**
**daß** die höhenverstellbaren Bauteile an einem gemeinsamen, gegenüber dem Träger (2) höhenverstellbaren Tragrahmen (27) angeordnet sind.
